# EUROPEAN PATENT SPECIFICATION

(11) **EP 0 701 333 B1**
(45) Date of publication and mention of the grant of the patent: **19.10.2005**
(21) Application number: 95305717.1
(22) Date of filing: 16.08.1995
(51) Int. Cl.: H04B 1/707

(54) **Synchronisation method and apparatus for a direct sequence spread spectrum communications system**
Verfahren und Gerät zur Synchronisierung in einem Direktsequenzspreizspektrumkommunikationssystem
Procédé et appareil de synchronisation pour système de communication à spectre étalé par séquence direct

(30) Priority: 22.08.1994 JP 19678094; 01.06.1995 JP 13494595
(43) Date of publication of application: 13.03.1996
(73) Proprietor: MATSUSHITA ELECTRIC INDUSTRIAL CO., LTD., Kadoma-shi, Osaka 571-0050 (JP)
(72) Inventor: Miya, Kazuyuki, Machida-shi, Tokyo 195 (JP); Go, Roland, Saedodaiichi-ryo 444, 749-1, Yokohama-shi, Kanagawa, 224 (JP); Kanaya, Hiroyuki, Apt. Iida Haitsu 3-201, 2-5-7, Yokohama-shi, Kanagawa, 226 (JP)
(74) Representative: Crawford, Andrew Birkby

(56) References cited:
- EP-A- 0 661 830
- US-A- 5 132 986
- US-A- 5 311 544
- PATENT ABSTRACTS OF JAPAN vol. 016, no. 385 (E-1249), 17 August 1992 (1992-08-17) & JP 04 124925 A (FUTABA CORP), 24 April 1992 (1992-04-24)
- IINATTI J ET AL: "USE OF A MATCHED FILTER FOR SYNCHRONIZATION OF A DS RECEIVER IN AWGN CHANNEL AND CONTINUOUS TONE JAMMING" PROCEEDINGS OF THE MEDITERANNEAN ELECTROTECHNICAL CONFERENCE, LJUBLJANA, MAY 22 - 24, 1991, vol. 1, no. CONF. 6, 22 May 1991 (1991-05-22), pages 716-719, XP000289534 ZAJC B;SOLINA F

## Description

### Background of the Invention

### (1) Field of the Invention

The present invention relates to a synchronizing method and its circuit device in a spread spectrum multiple access (SSMA) communication by direct spread method used in mobile communications such as digital car telephone and portable telephone.

### (2) Prior Art

Spread spectrum is a kind of communication by transmitting by spreading the spectrum of information signal to a sufficiently wide band as compared with the original information band width. Multiple access communication refers to simultaneous communications of plural stations in a same band.

In the direct spread method of modulating data by multiplying the spread series code directly by information signal, generally, binary codes such as M series and Gold series are known as spread series codes. As the self-correspondence waveform, one peak is detected for one symbol (generally corresponding to one bit of information signal).

In the spread spectrum communication in mobile communication, when the delay spread of radio wave by multipath propagation reached through various propagation paths is greater than the chip width, when the correlation is detected at the reception side by inverse spread, it is separated into plural delay waves. By combining them, a path diversity effect is obtained.

In the spread spectrum communication system, in order to take out the information by inverse spread at the reception side, the phase of the spread signal used in spread at the transmission side is estimated from the reception signal, and a replica of same phase must be generated. This is the problem of synchronization, and time axis estimation (phase estimation) of the spread signal is necessary. The phase difference between the spread signal contained in the reception signal and the diffusion signal generated in the reception signal must be kept in an extremely small range.

The problem of synchronization is divided into two processes, that is, a process of capturing (or initial synchronizing, leading in rough synchronizing), and a process of holding (or following, tracing, precision synchronizing). Unless the diffusion signal is within a range of phase difference of ±1 chip, usually, the value of self-correlation is not obtained, and hence it is first required to capture so that the phase difference of the input spread signal and local spread signal may settled within a range smaller than ±1 chip, and then hold in a perfect point of synchronization. Various methods have been researched and developed for the synchronizing system in the direct spread system, and the method of capturing and holding the synchronism by using the digital matched filter after lowering the carrier band to the base band has been occupying an important position along with the recent progress in the device.

Incidentally, when signals of plural stations are multiplexed and transmitted through multipath propagation path, various peak values are obtained at various sample points as the detection outputs of the reception wave. Its main cause is the effect of the mutual correlation by multiplexing in various phases of the signals modulated by different spread codes in the reception signals. As a result, in the case of spectrum communication by multiplexing of many stations in the multipath conditions, the peak position of the envelope detection output changes significantly when spread inversely at the reception side, and hence it is difficult to obtain a stable window central position by averaging in the initial mode, and even in the stationary mode, the possibility of coincidence of peak position and window central position is low, so that the chip shift of the window central position counter occurs always at high probability. Accordingly, correct symbol synchronization cannot be obtained, and normal data decoding is not realized.

US-A-5 132 986 discloses arrangements for various components of a CSK communication system: modulator, correlators, demodulator, carrier detection circuit and synchronization control circuit, which allow accurate demodulation of data from the received signal in the presence of noise and signal deterioration. The modulator permits the CSK system to use two M series codes in which the second code is simply a phase shifted version of the first code. The PN correlators, via shift-registers, efficiently output two correlation signals. The demodulator accepts two correlation signals from the correlators, detects auto-correlation peaks in the correlation signals, and uses the peaks to accurately determine whether the received bit has a value of "1" or "0". The carrier detecting circuit detects the presence of data in the received signal and allows demodulation of data without exact synchronization of the centre of the demodulator's monitoring window to auto-correlation peaks. The synchronization control circuit generates accurate timing pulses that mark the start and end of each data bit. If auto-correlation peaks appear consistently in one location for the duration of N consecutive data bits, subsequent timing pulses are delayed in accordance with weighted averages of the stored locations of auto-correlation peaks.

US-A-5 311 544 discloses a receiver of a direct sequence spread spectrum system including a period counter for counting a period of a system clock, and outputting a data demodulation signal approximately every half-PN period, a peak detector for detecting a peak in the output from an adder until reaching a data demodulation point for every data demodulating period, and outputting the value of the peak to the period counting means, a peak position detector for recognizing the detection of the peak in the peak detecting means, storing a current position of the peak from the period counting means, and then providing the peak position at a data demodulation point after the ending of one period, a timing recovery circuit for receiving position information about the current peak position from the peak position detecting means when beginning every data demodulation operation, and controlling the period counting means to move the peak position to allow the peak position of the following period to be observed in a desired position, and demodulator for demodulating the data whenever the peak is observed. Thus, the data can be stably demodulated by compensating for the influence due to a clock differential between the transmitting and receiving stages or fading.

EP-A-0 661 830 discloses a sync acquisition and tracking circuit for a DS/CDMA receiver, in which phase position signals are sequentially and cyclically selected at a specified rate higher than the rate at which Rayleigh fading occurs. The selected signal is used to control the phase of PN sequences. Correlation is taken between spread pilot signals and the orthogonal PN sequences at a chip rate to produce despread pilot signals, which are integrated to produce a correlation value. A set of accumulators are provided, which are sequentially and cyclically selected at the specified rate. The correlation value is applied to the selected accumulator to produce a total sum of correlation values. The highest total sums are selected from the outputs of all accumulators, and corresponding phase position signals are identified. A set of orthogonal despreading sequences are generated corresponding to the identified phase position signals for application to the receiver.

### Summary of the Invention

The invention is intended to solve these conventional problems, and it is an object thereof to present an excellent spread spectrum communication synchronizing method and its circuit device, capable of capturing and holding the symbol synchronization easily, accurately, and stably.

To achieve the object, in the invention, at the time of spread spectrum multiple access communication by direct spread system, the signal modulating the spread code by transmission data is sampled by the signal of n times (n: 1 or larger integer) of chip speed of the spread signal, the correlation is detected by a digital matched filter, the detection output in every sample in the symbol period is compared from the envelope detection output determined in every sampling period, the sample positions are stored for a specific number of determined samples, the number of times of storage of sample positions large in the stored detection output is counted in every symbol period, and the position of the largest number of times of storage is detected as the peak position.

Therefore, according to the invention, even in the case of spectrum communication by multiplexing of many stations in the multipath condition and drastic changes of the maximum peak position of the envelope detection output in inverse spread at the reception side, stable and accurate symbol synchronization can be captured and held, and the reception window position can be set, so that an excellent spread spectrum multiple access communication is realized.

### Brief Description of the Drawings

Fig. 1 is a block diagram a synchronizing circuit device and PDI receiver in embodiment 1 of the invention:
Fig. 2 is a schematic diagram showing the constitution of a sample position memory circuit in embodiment 1;
Fig. 3 is a flow chart showing the ranking and transmitting procedure in embodiment 1;
Fig. 4 is a block diagram showing the constitution of a ranking accumulation memory circuit in embodiment 1;
Fig. 5 is a block diagram of a synchronizing circuit device in embodiment 2 of the invention:
Fig. 6 is a block diagram of a synchronizing circuit device and PDI receiver in embodiment 3 of the invention;
Fig. 7 is a block diagram of a synchronizing circuit device in embodiment 4 of the invention;
Fig. 8 is a block diagram of a synchronizing circuit device in embodiment 5 of the invention;
Fig. 9 is a block diagram showing an example of ranking accumulation memory circuit in embodiment 6 of the invention;
Fig. 10 is a block diagram of a synchronizing circuit device in embodiment 7 of the invention;
Fig. 11 is a block diagram of a synchronizing circuit device and PDI receiver in embodiment 8 of the invention;
Fig. 12 is a block diagram of a synchronizing circuit device in embodiment 9 of the invention;
Fig. 13 is a schematic diagram showing an example of frame constitution in the foregoing embodiments; and
Fig. 14 is a block diagram of a peak position detention circuit and its surrounding circuit in embodiment 10 of the invention;

### Description of the Preferred Embodiments

### (Embodiment 1)

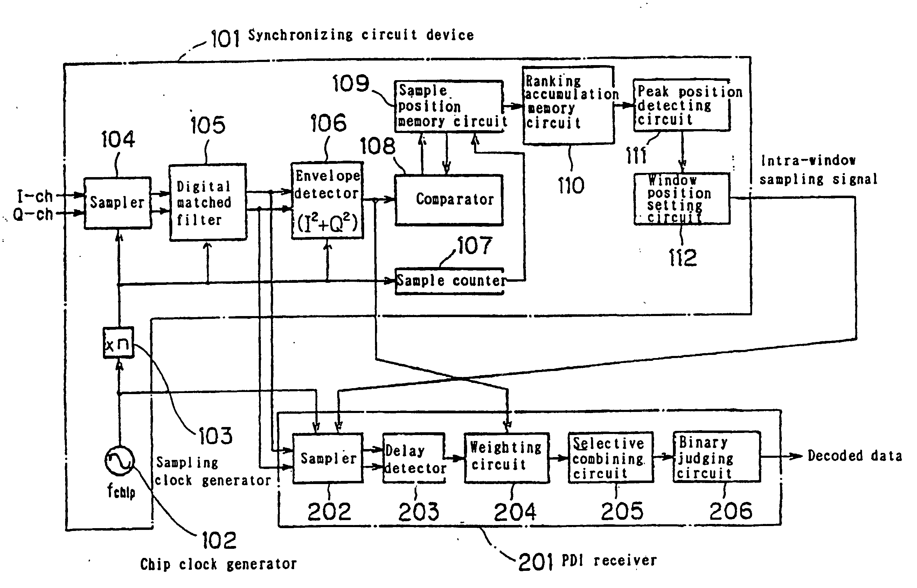

Fig. 1 is a block diagram a synchronizing circuit device and PDI receiver in embodiment 1 of the invention. In Fig. 1, reference numeral 101 denotes an entire synchronizing circuit device, 102 is a chip clock generator for generating a chip clock of a spread signal, 103 is a sampling clock generator for generating a sampling clock of n times (n: 1 or larger integer) of the chip speed, 104 is a sampler for sampling spread signals by the sampling clock, 105 is a digital matched filter for detecting correlation of the spread signals, 106 is an envelope detector for detecting an envelope in every sampling period of the signals detected for correlation, 107 is a sampling counter for counting the sampling clocks, 108 is a comparator for comparing the magnitude of detection output in every sample in the symbol period. 109 is a sample position memory circuit for storing the sample position (phase) for a predetermined number of samples in the descending order of magnitude of detection output, 110 is a ranking accumulation memory circuit for counting and storing the number of times of storage of the sample position large in the stored detection output in every symbol period, 111 is a peak detection circuit for detecting the sample position of the largest number of times of storage (the largest count number) as the peak position, and 112 is a window position setting circuit for capturing and holding the symbol synchronism from the peak position (phase) and setting the reception window position.

Reference numeral 201 denotes an entire PDI receiver, 202 is a sampler for sampling the signal necessary for decoding, out of the outputs from the matched filter 105, by using a sample signal in window, 203 is a delay detector for detecting delay of sampling signal, 204 is a weighting circuit for weighting the delay detection output depending on the degree of reliability, 205 is a selection combining circuit for diversity combination, and 206 is a binary judging circuit for obtaining decoded data.

The operation of this embodiment is described below. At the transmission side, for signals I, Q transmitted by modulating spread codes by data, a sampling signal of chip speed of n times (n: 1 or larger integer) of chip clock generated by the chip clock generator 101 is generated in the sampling clock generator 103, and sampling by the sampler 104 using this signal, the correlation is detected by the digital matched filter 105, and the detection output by every sampling period is determined by the envelope detector 106. This sampling signal is counted in every symbol period by the sample counter 107 which is a counter arbitrary in the initial phase and recycles in the symbol period, and the value is transmitted to the sample position memory circuit 109.

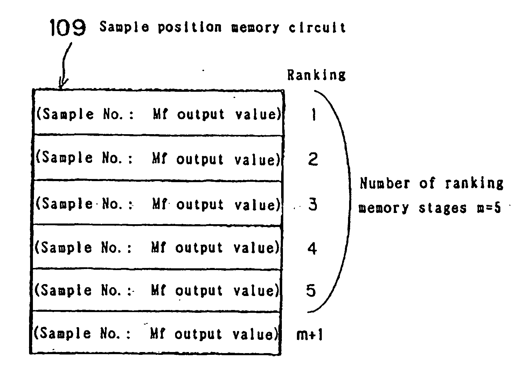

The comparator 108 compares the magnitude of the detection output in every sample in the period of one symbol, and the sample positions (phases) for a predetermined number of samples in the descending order of magnitude are stored in the sample position memory circuit 109. Fig. 2 shows a structural example of the sample position memory circuit 109. In this example, it is designed to store five samples large in the detection output among the samples in one symbol period. Besides, the detection output for comparison (called MF output) is stored at the same time. Supposing the number of stages of ranking memory to be m, it is m = 5 in this case. The stored sample position of large detection output is sent out and counter in the ranking accumulation memory circuit 110 in every symbol period.

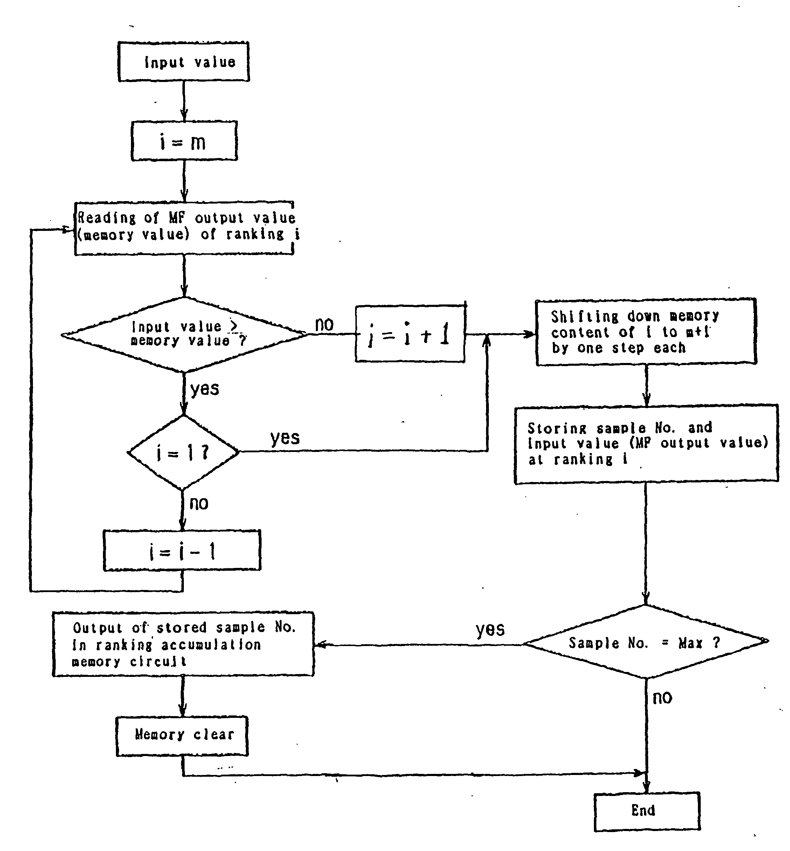

This ranking and transmitting procedure is shown in a flow chart in Fig. 3. In Fig. 3, the input values ranked from the largest detection output in the comparator 108 are compared with the MF output value (memory value) stored at ranking i in the sample position memory circuit 109. When the input value is same as or smaller than the memory value, the ranking i is added with 1 and the memory content of ranking positions from i to m+1 of the sampling position memory circuit 109 is shifted down by one step each, and a sample number and the input value at this time are newly stored as MF output value in the ranking position 1. When the input value is larger than the memory value, it is judged if i=1 or not, and when i=1, the memory content at each ranking position of the sampling position memory circuit 109 is shifted down by one step each, and the sample number and the input value at this time are newly stored as the MF output value in the ranking position i=1. If not i=1, supposing i-1, the MF output value of the ranking i-1 is read out, and the step after comparison with the input value is repeated.

The memory content at the ranking position i of the sampling position memory circuit 109 is rewritten, and when the new sample number at this time is Max, that is, equal to the maximum value of the cyclic sample counter 107 of one symbol period, the stored sample number is sent out into the ranking accumulation memory circuit 110, and the memory content of the sample position memory circuit 109 is cleared to be ready for next output from the comparator. When the rewritten sample number is not equal to Max, the above operation is repeated by the next output from the comparator.

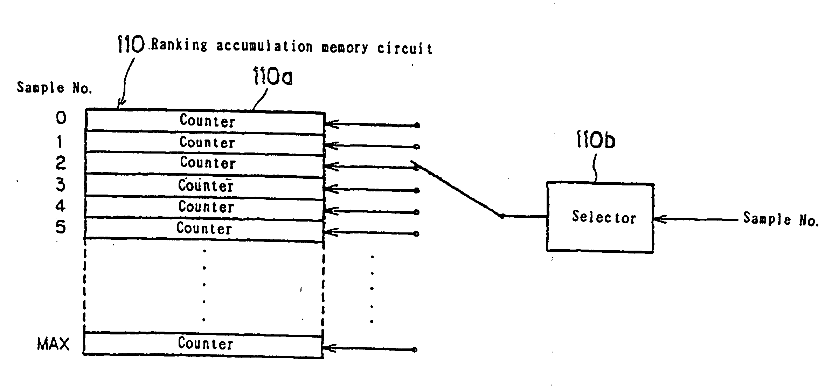

Fig. 4 shows an example of ranking storage memory circuit 110. A selector 110b is driven by a sample number sent from the sample position memory circuit 109, and the corresponding sample number is added to the specified counter 110a, and is counted up.

Back to Fig. 1, the peak position detection circuit 11 detects the sample position (phase) of the largest number of memories in the ranking storage memory 110, that is, the largest number of count, as the peak position, and the symbol synchronism is captured and held from this peak position in the window position setting circuit 112. As a result, if the maximum peak position of the envelope detection output by inverse spread at the reception side is changed drastically, a stable symbol synchronism can be captured and held. In this example, moreover, for setting the reception window position necessary for diversity reception such as Rake reception and PDI reception, an intra-window sampling signal is sent out from the window position setting circuit 112.

On the other hand, in the PDI receiver 201, the sampler 202 samples the signals necessary for decoding, output of the digital matched filter outputs, by using the intra-window sampling signal, and the detection output by the delay detector 203 is weighted by the degree of reliability in the weighting circuit 204, and combined by diversity in the selected combining circuit 205, and decoded data is sent out by the binary judging circuit 206.

Thus, according to the embodiment, from the envelope detection output determined in every sampling period, the size of the detection outputs in the symbol period is compared, and the sample position (phase) of large output is stored for a specific number of samples, and the number of times of storage of sample position is counted in every symbol period, and the sample position of the largest number of times of storage (largest number of count) is detected as the peak position, and hence if the maximum peak position of the envelope detection output changes drastically, capturing and holding of stable and accurate symbol synchronism and setting of reception window position can be done. Therefore, the symbol synchronism can be acquired and held easily, accurately, and stably, so that an excellent spread spectrum multiple access communication can be achieved.

### (Embodiment 2)

Embodiment 2 of the invention is described below.

In the spread spectrum multiple access communication, while the state of propagation path varies with the time and place moment after moment, the number of stations using the same band varies. Accordingly, the effect of mutual correlation changes significantly. It means that the difficulty of capturing and holding synchronism varies with the time and place. In particular, in the condition of significant interference or noise, it is possible that the phase of symbol synchronism is not stable in terms of the time.

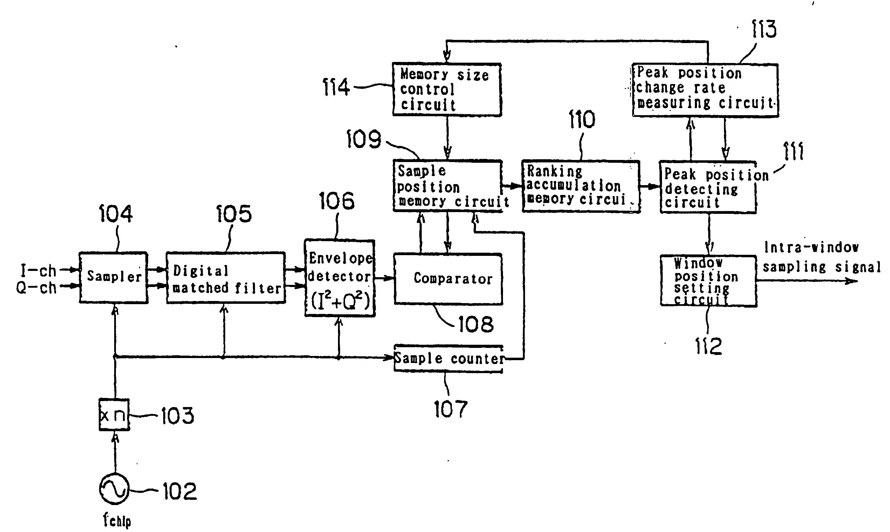

This embodiment is intended to capture and hold synchronism accurately and stably in operation regardless of the conditions, and a block diagram thereof is shown in Fig. 5. In Fig. 5, the synchronizing circuit device 101 in embodiment 1 is Fig. 1 is further combined with a peak position change rate measuring circuit 113 for changing the number of sample positions to be stored in the sample position memory circuit 109 depending on the time change rate of the peak position, or the number of sample positions to be counted in every sample period in the ranking accumulation memory circuit 110, and a memory size control circuit 114. The other parts are same as in Fig. 1, and are identified with same reference numerals. The PDI receiver 201 is not shown in the drawing.

The operation of this embodiment is described below. The basic operation is same as in embodiment 1 in Fig. 1. In this embodiment, in addition, the time change rate of the peak position is measured in the peak position change rate measuring circuit 113 from the output of the peak position detecting circuit 111, and, for example, when the peak position is stable, the transmission path condition is considered to be favorable, and the number of ranking memory stages m stored in the sample position memory circuit 109 is unchanged or decreased by controlling the memory size control circuit 114. When the peak position is unstable, the transmission path condition is poor, and many unnecessary peaks occur, and the probability of the peak value of the truly desired peak position becoming the size within the number of memory stages is low, and hence it is considered unstable, and it is controlled by the memory size control circuit 114 to increase the number of ranking memory stages m.

In this case, as the method of control, aside from increasing the number of ranking memory stages m, the number of ranking memory stages is fixed at m, and the number of sample positions to be counted in every symbol period may be varied in the ranking accumulation memory circuit 110. In any method, it is effective that the capturing and holding of synchronism may operate accurately and stably.

### (Embodiment 3)

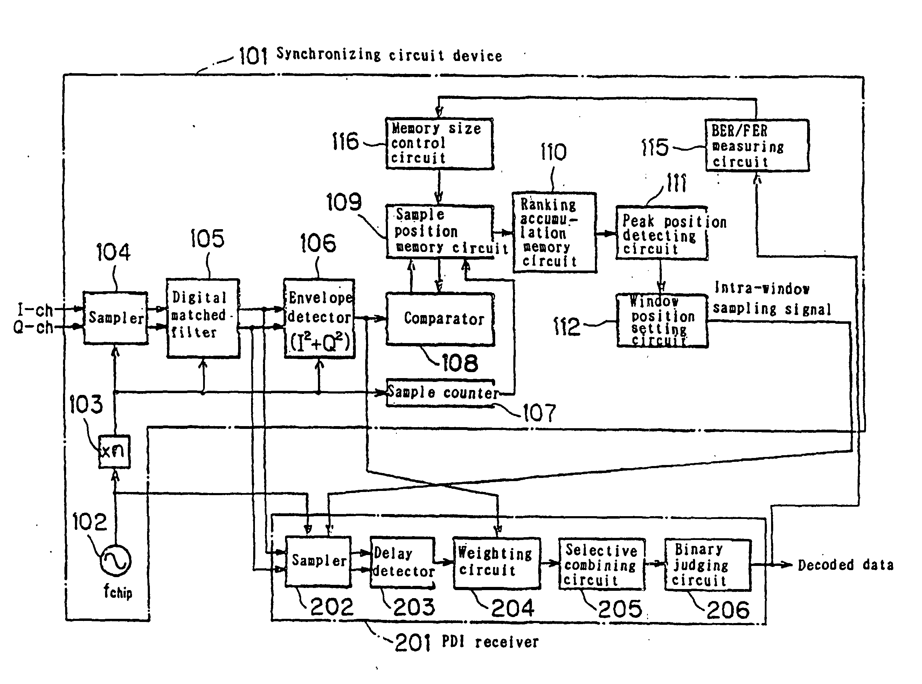

Embodiment 3 of the invention is described below. In spread spectrum multiple access communication, in the condition of large interference or noise, there is a possibility of the phase of symbol synchronism not stabilized in time, or possibility of stabilizing in wrong phase. This embodiment is intended to operate so as to capture or hold the synchronism accurately and stably, and its block diagram is shown in Fig. 6. In Fig. 6, the synchronizing circuit device 101 in Fig. 1 is further combined with a BER (bit error rate)/FER (frame error rate) measuring circuit 115 for varying the number of sample positions to be stored in the sample position memory circuit 109 depending on the error rate of decoded data, BER or FER, or the number of sample positions for counting in every symbol period in the ranking accumulation memory circuit 110, and a memory size control circuit 116. As the demodulator, the PDI receiver 201 shown in Fig. 1 is used, and the decoded data decoded by this PDI receiver 201 is entered in the BER/FER measuring circuit 115. The other parts are same as the parts in Fig. 1 and are hence identified with the same reference numerals.

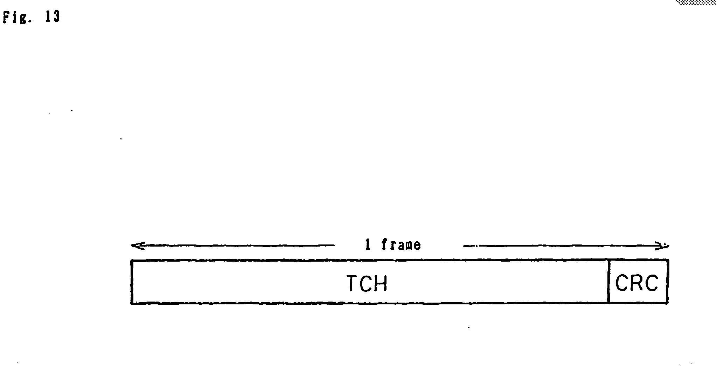

The operation of the embodiment is described below. The basic operation is same as in embodiment 1 in Fig. 1. In the case of transmission in frame unit as shown in Fig. 13, an error detection code such as CRC is added to the transmission data (TCH), and by detecting error due to CRC from the decoded data at the reception side, frame error can be detected. On the basis of the error rate measured in the BER/FER measuring circuit 115, for example, when the peak position is stabilized, the transmission path condition is considered to be satisfactory, and it is controlled by the memory size control circuit 116 to keep unchanged or decrease the number of ranking memory stages m to be stored in the sample position memory circuit 109. When the peak position is unstable, the transmission path condition is poor, many undesired peaks are formed, and the probability of the peak value of the peak position truly desired to be determined becoming the size within the number of memory stages is low, and hence it is considered unstable, and it is controlled by the memory size control circuit 116 so as to increase the number of ranking memory stages m.

In this case, too, aside from increasing the number of ranking memory stages m, as the control method, the number of ranking memory stages may be fixed at m, and the number of sample positions to be counted in every symbol period may be varied in the ranking accumulation memory circuit 110. In any method, by controlling on the basis of the error rate of decoded data, the possibility of the phase of symbol synchronism not stabilized in time or the possibility of stabilizing in wrong phase may be decreased, and it is effective to operate to capture and hold the synchronism accurately and stably.

### (Embodiment 4)

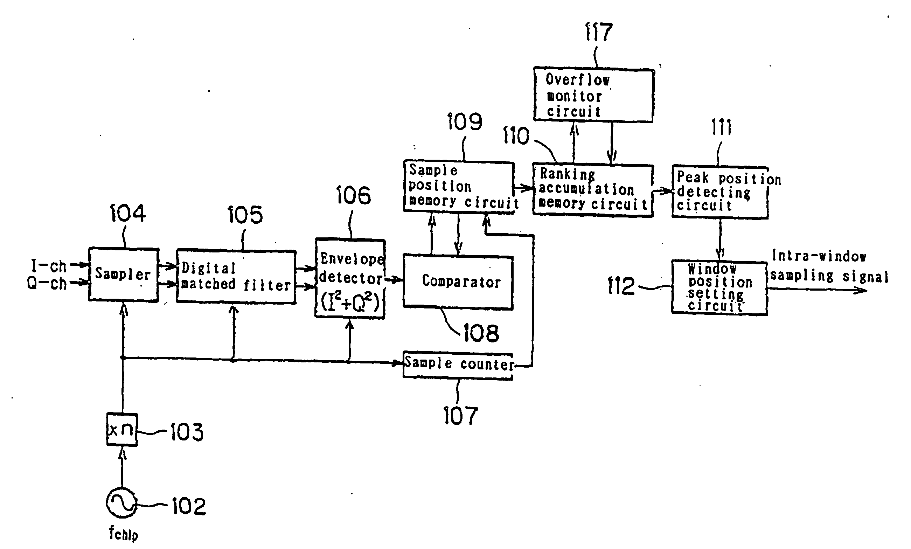

Embodiment 4 of the invention is described below. The sample position large in the envelope detection output is sent out and counted in the ranking accumulation memory circuit 110 in every symbol period. However, when the ranking accumulation memory circuit 110 is constituted as shown in Fig. 4, the size of the counter is limited, and when overflowing, correct result is not obtained in the peak position detecting circuit 111 in a later stage. In this embodiment, therefore, as shown in Fig. 7, in order to prevent overflow of the ranking accumulation memory circuit 110, an overflow monitor circuit 117 is added to the synchronizing circuit device 101 in Fig. 1. The other parts are same as the parts in Fig. 1 and are identified with same reference numerals. The PDI receiver 201 is not shown.

The operation of the embodiment is described. The basic operation is same as in embodiment 1. The overflow monitor circuit 117 monitors the counting number of every sample of the ranking accumulation memory circuit 110, and when the maximum value of the counting number exceeds a certain value, a determined value is subtracted from each counting number of all samples stored. As a result, overflow of the ranking accumulation memory circuit 110 is prevented, and it is effective to operate to capture or hold the synchronism accurately and stably.

### (Embodiment 5)

Embodiment 5 of the invention is described below. At the time of initial synchronism capturing, the peak position changes drastically in every symbol, but after lapse of certain time, generally it is stabilized gradually to converge on the peak position to be determined. Therefore, in the synchronized state, stable operation is possible if not accumulated in ranking in all symbol period.

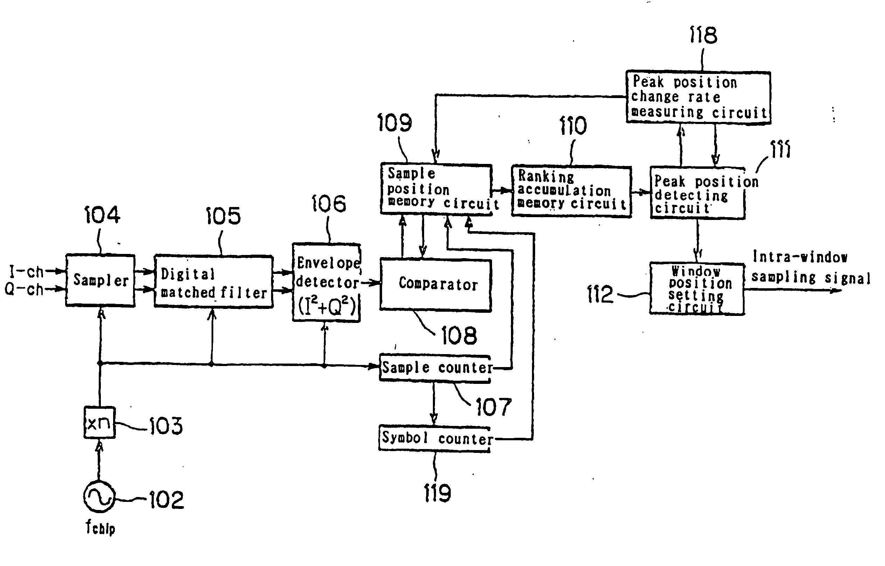

In the embodiment, accordingly, as shown in Fig. 8, the initial mode and stationary mode are distinguished by the time change rate of peak position in the synchronizing circuit device 101 in Fig. 1. and a peak position change rate measuring circuit 118 for changing the timing (period) of counting the sample position stored in the sample position memory circuit 109 in the ranking accumulation memory circuit 110 and a symbol counter 119 are added. The other parts are same as the parts in Fig. 1, and are identified with same reference numerals. The PDI receiver 201 is not shown.

The operation of the embodiment is described below. The basic operation is same as in embodiment 1 in Fig. 1. From the output of the peak position detecting circuit 111, the time change rate of the peak position is measured in the peak position change rate measuring circuit 118, distinguishing as initial mode when the change rate is large and stationary mode when small, and in the initial mode, sample positions (phases) for a specific number of samples stored in the sample position memory circuit 109 are sent out and counted in the ranking accumulation memory circuit 110 in every symbol period. In the stationary mode, by contrast, the period for sending out and counting is extended from one symbol to several symbols. At this time, on the basis of the signal of the sample counter 107, a timing signal is created in the symbol counter 119, and this signal is used to send out the sample position memory circuit 109. In this stationary mode, it is not always necessary to fix the period, but it may be variable depending on the change rate of the peak position. In this method and constitution, it is possible to decrease the number of times of operation of the ranking accumulation memory circuit 110 in the stationary mode, so that it is effective to save the current consumption in the hardware.

### (Embodiment 6)

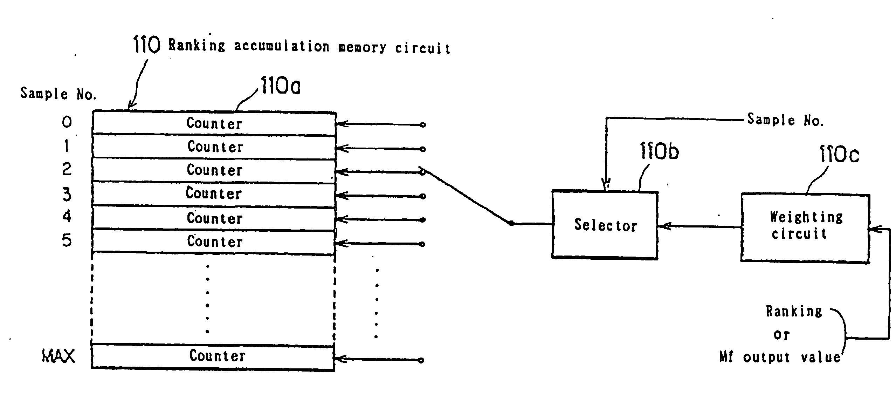

Embodiment 6 of the invention is described below. In this embodiment, in order to enhance the performance of capturing and holding the synchronism, when counting the sample position stored in the sample position memory circuit 109 in the ranking accumulation memory circuit 110, in embodiment 1, the constitution of the ranking accumulation memory circuit 110 is modified as shown in Fig. 9 so as to count by weighting in consideration of the magnitude or order (ranking) of the detection output.

That is, from the sample position memory circuit 109, in addition to the sample position, the ranking at this time or the detection output value (MF output value) is also sent out, and in the ranking accumulation memory circuit 110, as shown in Fig. 9, the selector 110 is changed over by the sample number, and further the value converted in the weighting circuit 110c depending on the ranking or magnitude of the detection output value is added to the counter 110a. As a result, the convergence time in synchronism capturing can be shortened, and the performance is enhanced.

### (Embodiment 7)

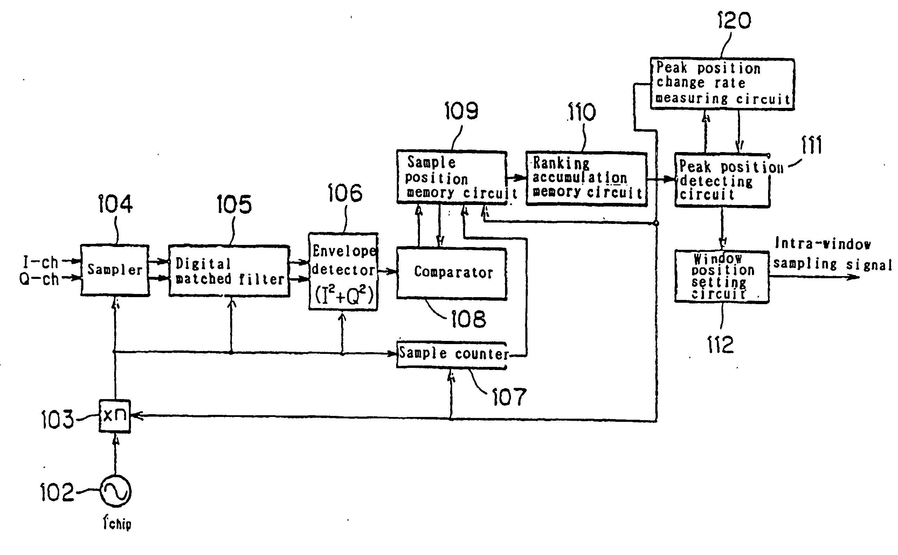

Embodiment 7 of the invention is described below. In this embodiment, in order to enhance the synchronism capturing and holding performance, in embodiment 1, the operating time of the sampler is varied depending on the time change rate of the peak position as shown in Fig. 10, and the entire operating speed up to the sample position memory circuit 109 is changed at the same time, by disposing a peak position change rate measuring circuit 120, thereby changing the period for counting the number of times of storage of sample positions stored in the sequence from the greatest envelope detection output. The other parts are same as the parts in Fig. 1, and are identified with same reference numerals. The PDI receiver 201 is not shown.

The operation of the embodiment is described below. The basic operation is same as in embodiment 1 in Fig. 1. In addition, the time change rate of the peak position is measured by the peak position change rate measuring circuit 120 from the output of the peak position detecting circuit 111, and, for example, when the peak position is stabilized, it is regarded as favorable transmission path condition or stationary mode, and it is controlled to drop the sample period (to reduce n of the sampling clock generator 103). Or, when the peak position is unstable, the transmission path condition is poor and many undesired peaks are formed, or it is considered to be unstable due to initial mode, and hence it is controlled to increase the sample period (to increase n of the sampling clock generator 103). Simultaneously with the change of sample period, the entire operation speed up to the sample position memory circuit 109 is also changed, and the cyclic period of the sample counter 107 and data transmission timing of the sample position memory circuit 109 are changed at the same time. Consequently, depending on the transmission path condition or operation mode, it is effective to operate to capture or hold the synchronism accurately and stably.

### (Embodiment 8)

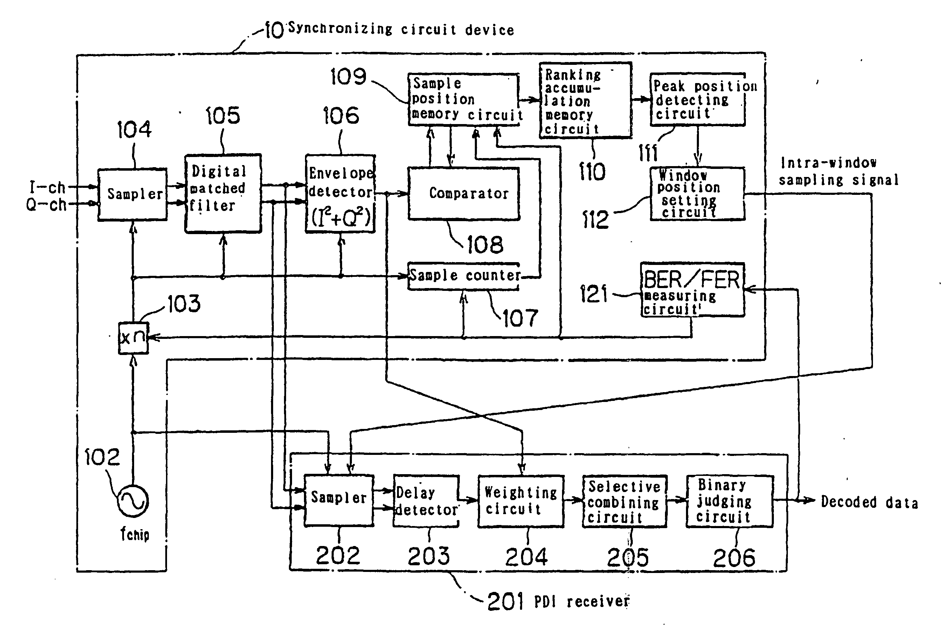

Embodiment 8 of the invention is described below. In the embodiment, in order to enhance the synchronism capturing or holding performance, in embodiment 1 in Fig. 1, a BER/FER measuring circuit 121 is provided, as shown in Fig. 11. in order to vary the operating speed of the sampler by the error rate of the decoded data, and change the entire operating speed up to the sample position memory circuit 109 at the same time, and the period for counting the sample position stored in the sample position memory circuit 109 in the ranking accumulation memory circuit 110 is changed. The other parts are same as parts in Fig. 1, and are identified with same reference numerals.

The operation of the embodiment is described below. The basic operation is same as in embodiment 1 in Fig. 1. As shown in Fig. 13, when transmitting in the frame unit, an error detection code such as CRC is added to the transmission data (TCH) when transmitting, and at the reception side, by detecting error by CRC from the decoded data, frame error can be detected. On the basis of the error rate measured in the BER/FER measuring circuit 121, for example, when the peak position is stable, it is regarded as favorable transmission path condition or stationary mode, and it is controlled to drop the sample period (to reduce n of the sampling clock generator 103). Or, when the peak position is unstable, the transmission path condition is poor and many undesired peaks are formed, or it is considered to be unstable due to initial mode, and hence it is controlled to increase the sample period (to increase n of the sampling clock generator 103). Simultaneously with the change of sample period, the entire operation speed up to the sample position memory circuit 109 is also changed, and the cyclic period of the sample counter 107 and data transmission timing of the sample position memory circuit 109 are changed at the same time. Consequently, depending on the transmission path condition or operation mode, it is effective to operate to capture or hold the synchronism accurately and stably.

### (Embodiment 9)

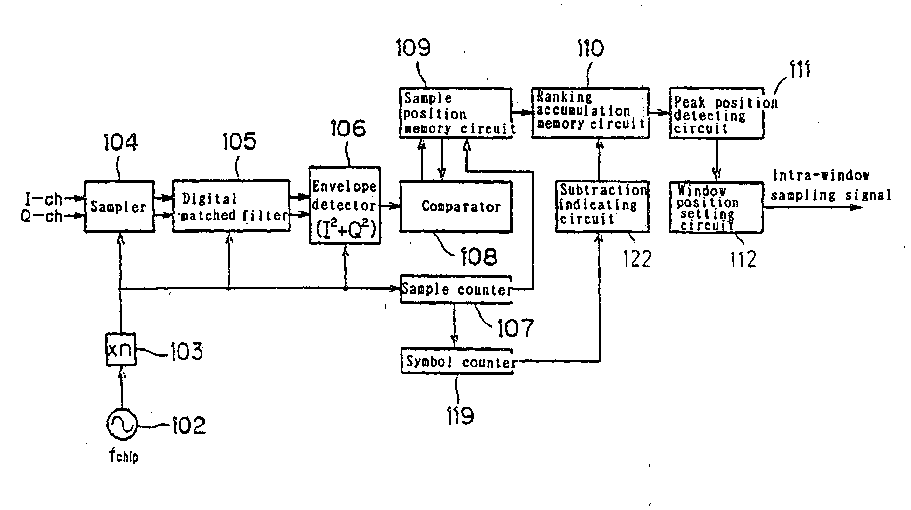

Embodiment 9 of the invention is described below. In embodiment 1 in Fig. 1, the sample position large in the envelope detection output is sent out and counted in the ranking accumulation memory circuit 110 in every symbol period. However, when the ranking accumulation memory circuit 110 is constituted as shown in Fig. 4, the size of the counter 110a is limited, and if overflowing, correct result cannot be obtained in the peak position detection circuit 111 in the later stage. Or if provided with a too large counter, although the correct peak position in the reception signal has been already changed actually due to the propagation condition changing moment after moment, the effect of the former ranking result is left over excessively in the ranking accumulation memory circuit 110. As a result, when the sample position of the largest number of times of memory is detected as the peak position in the peak position detecting circuit 111, it may fail to follow up the actual change of the peak position and the performance may deteriorate. In the embodiment, accordingly, in order to enhance the following performance to the peak position change, as shown in Fig. 12, a symbol counter 119 and a subtraction indicating circuit 122 are added to the synchronizing circuit device in Fig. 1. The other parts are same as parts in Fig. 1, and are identified with same reference numerals. The PDI receiver 201 is not shown.

The operation of the embodiment is described below. The basic operation is same as in embodiment 1 in Fig. 1. The subtraction indicating circuit 122 instructs subtraction to the ranking accumulation memory circuit 110 when the number of symbols counted by the symbol counter 119 becomes a certain value, and, receiving the instruction, the ranking accumulation memory circuit 110 subtracts a predetermined value from each counting number of all samples stored. As a result, in the ranking accumulation memory circuit 110, there is no old ranking result, and hence the following performance to the peak position change is enhanced, and overflow of the ranking accumulation memory circuit 110 is also blocked, so that it is effective to operate to capture or hold the synchronism accurately and stably.

Meanwhile, the subtraction indicating circuit 122 instructs subtraction to the ranking accumulation memory circuit 110 in every certain period, and does not count the number of samples, and hence it is evident that the number of samples or number of frames may be counted.

### (Embodiment 10)

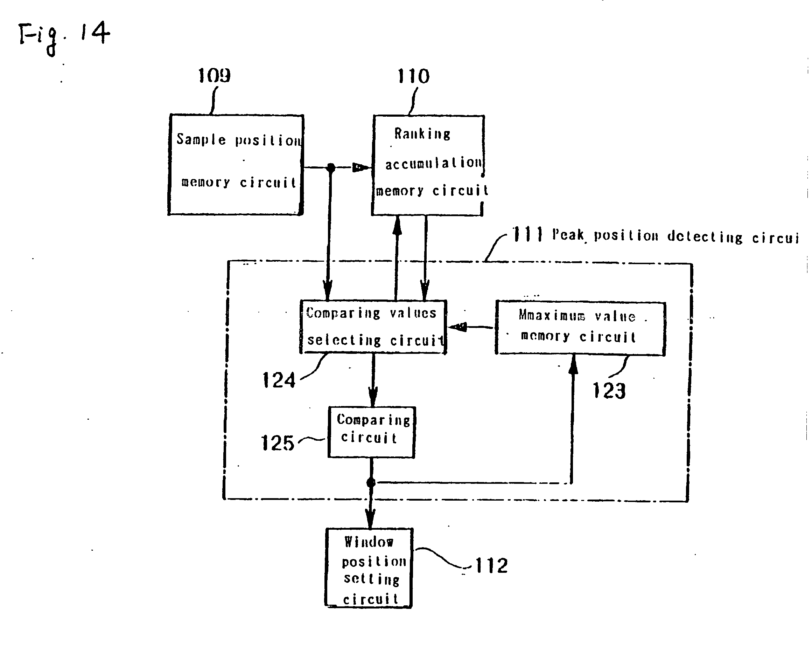

Embodiment 10 of the invention is described below. In embodiment 1 in Fig. 1, the sample position large in the envelope detection output is sent out from the sample position memory circuit 109 and counted in the ranking accumulation memory circuit 110 in every symbol period and the sample number of tha maximum count value in all of the ranking accumulation memory circuit 110 is detected as the peak posision. In the embodiment, in order to reduce the numbers of comparing times for detecting the maximum value from the ranking accumulation memory circuit 110, as shown in Fig. 14, the peak position detection circuit 111 in Fig. 1 is made up of a maximum value memory circuit 123, a comparing values selecting circuit 124 and a comparing circuit 125.

The operation of the embodiment is described below. The basic operation is same as in embodiment 1 in Fig. 1. The ranking accumulation memory circuit 110 counts up m (m is the number of ranking memory stages) numbers of the sample number sent from the sample position memory circuit 109 in every symbol period. The peak position detecting circuit 111 detects the maximum value from the output of the ranking accumulation memory circuit 110, and in this stage of symbol period, the maximum value detected by the peak position detecting circuit 111 is the sample number detected as the peak posotion in one symbol period prior or the sample number counted up in the symbol period of this stage.

The comparing values selecting circuit 124 selects m+1 counted values of the sample numbers which are the one detected as the peak position before one symbol period and memorized in the maximum value memory circuit 123, and the m sample numbers from the sample position memory circuit 109. The comparing circuit 125 compares the m+1 counted values, and supplies the sample number of maximum counted value to the window position setting circuit 112 as a peak position detected results. The sample number of maximum counted value is also me morized in the maximum value memory circuit 123.

As described above, the numbers of the comparing times in the peak position detection circuit 111 is reduced to m+1 times.
Fig. 1
   - 101: Synchronizing circuit device
   - 102: Chip clock generator
   - 103: Sampling clock generator
   - 104: Sampler
   - 105: Digital matched filter
   - 106: Envelope detector
   - 107: Sample counter
   - 108: Comparator
   - 109: Sample position memory circuit
   - 110: Ranking accumulation memory circuit
   - 111: Peak position detecting circuit
   - 112: Window position setting circuit Intra-window sampling signal
   - 201: PDI receiver
   - 202: Sampler
   - 203: Delay detector
   - 204: Weighting circuit
   - 205: Selective combining circuit
   - 206: Binary judging circuit Decoded data
Fig. 2
   (Sample No.: Mf output value)
   Ranking
   Number of ranking memory stages m=5
Fig. 3
   Input value
   Reading of MF output value (memory value) of ranking i
   Input value > memory value ?
   Shifting down memory content of i to m+1 by one step each
   Storing sample No. and input value (MF output value) at ranking i
   Output of stored sample No. in ranking accumulation memory circuit
   Sample No. = Max ?
   Memory clear
   End
Fig. 4
   Sample No.
   Counter
   - 110b: Selector
Fig. 5
   - 113: Peak position change rate measuring circuit
   - 114: Memory size control circuit
Fig. 6
   - 115: BER/FER measuring circuit
   - 116: Memory size control circuit
Fig. 7
   - 117: Overflow monitor circuit
Fig. 8
   - 118: Peak position change rate measuring circuit
   - 119: Symbol counter
Fig. 9
   Ranking or MF output value
Fig. 10
   - 120: Peak position change rate measuring circuit
Fig. 11
Fig. 12
   - 122: Subtraction indicating circuit
Fig. 13
   - 1: frame
Fig. 14
   - 109: Sample position memory circuit

   - 110: Ranking accumulation memory circuit
   - 111: Peak position detecting circuit
   - 112: Window position setting circuit Intra-window sampling signal
   - 123: Mmaximum value memory circuit
   - 124: Comparing values selecting circuit
   - 125: Comparing circuit

## Claims

1. A spread spectrum communication synchronizing method, comprising the steps of:
a. sampling a received transmission spread spectrum signal comprising a spreading code modulated with data, using a sampling clock having a rate which is an integer multiple of a spreading code chip speed,
b. correlating values of the sampled signal by inverse spreading,
c. performing envelope detection of the correlated values for all sample values in a symbol period, and comparing a magnitude of each detection output,
d. storing the sample position of a large output signal, of the m largest samples among one symbol period, where m is a specified number and wherein said m sample positions are stored in descending order of the magnitude of the detection output,
e. counting numbers of times sample positions are stored in each symbol period,
f. detecting as a peak position the sample position corresponding to the largest number of times the sample position is stored in each sample period, and
g. synchronizing the data symbol using the detected peak position.

2. A spread spectrum communication synchronizing method as claimed in claim 1, wherein a correlation of the spread spectrum signal is detected by a digital matched filter (105).

3. A spread spectrum communication synchronizing method as claimed in claim 1 or 2, wherein the detected peak position is used to capture and hold the symbol period and to set a reception window position.

4. A spread spectrum communication synchronizing method as claimed in any preceding claim, wherein the number of sample positions stored in step d, and the number of stored sample positions for which the number of storage times is counted in step e, are variable based on a time change rate of the peak position.

5. A spread spectrum communication synchronizing method as claimed in any of claims 1 to 3, wherein the number of sample positions stored in step d, and the number of stored sample positions for which the number of storage times is counted in step e are variable based on an error rate of decoded data.

6. A spread spectrum communication synchronizing method as claimed in any of claims 1 to 3, wherein in step e, when any sample position count exceeds a predetermined maximum value all the sample position counts are reduced by a further predetermined value.

7. A spread spectrum communication synchronizing method of any of claims 1 to 4, wherein a period for counting the sample numbers of step e, is variable based on a time change rate of the peak position.

8. A spread spectrum communication synchronizing method of any of claims 1 to 3, wherein in step e,
a weighting value depending on the ranking or magnitude of the detected samples is added to the counted sample numbers.

9. A spread spectrum communication synchronizing method of any of claims 1 to 3, wherein the sampling speed for detecting the correlation of step b, and the operational speed of step d, are variable based on a time change rate of the peak position.

10. A spread spectrum communication synchronizing method of any of claims 1 to 3, wherein the sampling speed for detecting the correlation of step b, and the operational speed of step d, is variable based on an error rate of decoded data.

11. A spread spectrum communication synchronizing method of any of claims 1 to 3, wherein a predetermined value is subtracted from the value of each stored sample position in every certain period.

12. A spread spectrum communication synchronizing method of any of claims 1 to 3, wherein the peak position is detected by comparing the peak position detected in an immediately previous symbol period and the sample position in a current symbol period.

13. A spread spectrum communication synchronizing apparatus, comprising:
a sampler (104) for sampling a received signal comprising a spreading code modulated with data, using a sampling clock having a rate which is an integer multiple of a spreading code chip speed,
correlating means performing inverse spreading of the sampled signal and providing a correlated signal,
detecting means (106), detecting the envelope of the correlated signal for all sample values in a symbol period,
a comparator (108), comparing the magnitude of the detection output of the detecting means (106) for each sample value,
sample position memory means (109) coupled to said detecting means (106) for storing sample positions, of the m largest samples among one symbol period, where m is a specified number and wherein said samples positions are stored in descending order of the magnitude of the detection output,
ranking accumulation memory means (110) for counting and storing the numbers of times sample positions are stored in each symbol period,
peak position detecting means (111) for detecting as a peak position the sample position corresponding to the largest number of times the sample position is stored in each sample period.

14. A spread spectrum communication synchronizing apparatus as claimed in claim 13, wherein the correlating means comprise a digital matched filter (105).

15. A spread spectrum communication synchronizing apparatus as claimed in claim 13 or 14, further comprising window setting means (112) arranged to at least one of capture and hold the symbol period and to set a reception window position.

16. A spread spectrum communication synchronizing apparatus as claimed in any of claims 13 to 15, wherein the ranking accumulation memory means (110) are arranged to rank the specified number of sample positions stored in the sample position memory means (109) and to store a predetermined number of largest ranked positions of said specified number of positions stored in the sample position memory means.

17. A spread spectrum communication synchronizing apparatus of any of claims 13 to 16, further comprising:
means for varying the number of sample positions stored in the sample position memory means (109) and the number of sample positions counted in each symbol period in the ranking accumulation memory means (110) based the time change rate of the peak position.

18. A spread spectrum communication synchronizing apparatus of claim 16, further comprising:
means for varying the number of sample positions stored in the sample position memory means (109) and the number of sample positions counted in each symbol period in the ranking accumulation memory means (110) based on the error rate of decoded data.

19. A spread spectrum communication synchronizing apparatus of any of claims 13 to 16, further comprising:
means (117) for subtracting a determinate value from the count values of the sample positions stored when a count value exceeds a predetermined maximum value in the ranking accumulation memory means (110).

20. A spread spectrum communication synchronizing apparatus of any of claims 13 to 16, further comprising;
means (118) for varying the period for counting the sample positions stored in the sample position memory means (109) by the ranking accumulation memory means (110), based on a time change rate of the peak position.

21. A spread spectrum communication synchronizing apparatus of any of claims 13 to 16, further comprising:
means for counting the sample positions stored in the sample position memory means (109) by the ranking accumulation memory means (109) wherein a weighting value depending on the ranking or magnitude of the detected samples is added to the counted sample numbers.

22. A spread spectrum communication synchronizing apparatus of any of claims 13 to 16, further comprising:
means (120) for varying the operating speed of the sampler (104), and the operating speed of the sample position memory means (109) based on a time change rate of the peak position.

23. A spread spectrum communication synchronizing apparatus of any of claims 13 to 16, further comprising:
means (121) for varying the operating speed of the sampler (104) and the sample position memory means (109) based on an error rate of decoded data.

24. A spread spectrum communication synchronizing apparatus of any of claims 13 to 16, further comprising:
means (122) subtracting a determinated value from the counts stored in the ranking accumulator memory means (110) in every certain period.

25. A spread spectrum communication synchronizing apparatus of any of claims 13 to 16, further comprising:
a memory (123) for memorizing a peak position detected in an immediately preceding symbol period,
a selector (124) for selecting sample positions for comparison, and
a second comparator (125) coupled to the selector for comparing the sample positions selected by the selector.

26. A spread spectrum communication synchronizing apparatus of any of claims 13 to 25, further comprising:
a clock generator (102) having a predetermined clock rate,
wherein the sampling clock has a rate which is an integer multiple of the clock rate of the clock generator.

27. A spread spectrum communication apparatus according to any of claims 13 to 26, further comprising a sample counter (107) for counting the sampling clocks.

## Patentansprüche

1. Spreizspektrum-Kommunikations-Synchronisationsverfahren, das die folgenden Schritte umfasst:
a. Abtasten eines empfangenen Spreizspektrum-Sendesignals, das einen mit Daten modulierten Spreizungscode umfasst, unter Verwendung eines Abtastaktes mit einer Rate, die ein Ganzzahl-Vielfaches einer Spreizungscode-Chipgeschwindigkeit ist,
b. Korrelieren von Werten des abgetasteten Signals durch inverse Spreizung,
c. Durchführen einer Hüllkurvengleichrichtung der korrelierten Werte für alle Abtastwerte in einer Symbolperiode und Vergleichen einer Größe jedes Gleichrichtungsausgangs,
d. Speichern der Abtastposition eines großen Ausgangssignals der m größten Abtastungen aus einer Symbolperiode, wo m eine spezifizierte Zahl ist, und wobei die m Abtastpositionen in absteigender Reihenfolge der Größe des Gleichrichtungsausgangs gespeichert werden,
e. Zählen der Zahlen von Malen, die Abtastpositionen in jeder Symbolperiode gespeichert werden,
f. Erfassen als eine Spitzenposition die Abtastposition, die der größten Zahl von Malen entspricht, die die Abtastposition in jeder Abtastperiode gespeichert wird, und
g. Synchronisieren des Datensymbols unter Verwendung der erfassten Spitzenposition.

2. Spreizspektrum-Kommunikations-Synchronisationsverfahren nach Anspruch 1, wobei eine Korrelation des Spreizspektrumsignals durch ein angepasstes Digitalfilter (105) erfasst wird.

3. Spreizspektrum-Kommunikations-Synchronisationsverfahren nach Anspruch 1 oder 2, wobei die erfasste Spitzenposition verwendet wird, um die Symbolperiode zu ergreifen und zu halten und um eine Empfangsfensterposition festzulegen.

4. Spreizspektrum-Kommunikations-Synchronisationsverfahren nach einem der vorangehenden Ansprüche, wobei die Zahl von in Schritt d gespeicherten Abtastpositionen und die Zahl von gespeicherten Abtastpositionen, für die die Zahl von Malen des Speichems in Schritt e gezählt wird, basierend auf einer zeitlichen Änderungsrate der Spitzenposition variabel sind.

5. Spreizspektrum-Kommunikations-Synchronisationsverfahren nach einem der Ansprüche 1 bis 3, wobei die Zahl von in Schritt d gespeicherten Abtastpositionen und die Zahl von gespeicherten Abtastpositionen, für die die Zahl von Malen des Speichems in Schritt e gezählt wird, basierend auf einer Fehlerrate von decodierten Daten variabel sind.

6. Spreizspektrum-Kommunikations-Synchronisationsverfahren nach einem der Ansprüche 1 bis 3, wobei in Schritt e, wenn irgendein Abtastpositionszählwert einen vorbestimmten Maximalwert übersteigt, alle Abtastpositionszählwerte um einen weiteren vorbestimmten Wert vermindert werden.

7. Spreizspektrum-Kommunikations-Synchronisationsverfahren nach einem der Ansprüche 1 bis 4, wobei eine Periode zum Zählen der Abtastzahlen von Schritt e basierend auf einer zeitlichen Änderungsrate der Spitzenposition variabel ist

8. Spreizspektrum-Kommunikations-Synchronisationsverfahren nach einem der Ansprüche 1 bis 3, wobei in Schritt e ein Wichtungwert, der von dem Rang oder der Größe der erfassten Abtastungen abhängt, zu den gezählten Abtastzahlen addiert wird.

9. Spreizspektrum-Kommunikations-Synchronisationsverfahren nach einem der Ansprüche 1 bis 3, wobei die Abtastgeschwindigkeit zum Erfassen der Korrelation von Schritt b und die Arbeitsgeschwindigkeit von Schritt d basierend auf einer zeitlichen Änderungsrate der Spitzenposition variabel sind.

10. Spreizspektrum-Kommunikations-Synchronisationsverfahren nach einem der Ansprüche 1 bis 3, wobei die Abtastgeschwindigkeit zum Erfassen der Korrelation von Schritt b und die Arbeitsgeschwindigkeit von Schritt d basierend auf einer Fehlerrate von decodierten Daten variabel sind.

11. Spreizspektrum-Kommunikations-Synchronisationsverfahren nach einem der Ansprüche 1 bis 3, wobei ein vorbestimmter Wert von dem Wert jeder gespeicherten Abtastposition in jeder bestimmten Periode subtrahiert wird.

12. Spreizspektrum-Kommunikations-Synchronisationsverfahren nach einem der Ansprüche 1 bis 3, wobei die Spitzenposition durch Vergleichen der in einer unmittelbar vorhergehenden Symbolperiode erfassten Spitzenposition und der Abtastposition in einer laufenden Symbolperiode erfasst wird.

13. Spreizspektrum-Kommunikations-Synchronisationsvorrichtung, die umfasst:
einen Abtaster (104) zum Abtasten eines empfangenen Signals, das einen mit Daten modulierten Spreizungscode umfasst, unter Verwendung eines Abtastaktes mit einer Rate, die ein Ganzzahl-Vielfaches einer Spreizungscode-Chipgeschwindigkeit ist,
eine Korrelationseinrichtung zum Durchführen einer inversen Spreizung des abgetasteten Signals und Bereitstellen eines korrelierten Signals,
eine Gleichrichtungseinrichtung (106) zum Gleichrichten der Hüllkurve des korrelierten Signals für alle Abtastwerte in einer Symbolperiode,
einen Vergleicher (108), der die Größe des Gleichrichtungsausgangs der Gleichrichtungseinrichtung (106) für jeden Abtastwert vergleicht,
eine Abtastpositions-Speichereinrichtung (109), die mit der Gleichrichtungseinrichtung (106) verbunden ist, zum Speichern von Abtastpositionen der m größten Abtastungen aus einer Symbolperiode, wo m eine spezifizierte Zahl ist, und wobei die Abtastpositionen in absteigender Reihenfolge der Größe des Gleichrichtungsausgangs gespeichert werden,
eine Rangordnungs-Akkumulations-Speichereinrichtung (110) zum Zählen und Speichern der Zahl von Malen, die Abtastpositionen in jeder Symbolperiode gespeichert werden, und
eine Spitzenpositions-Erfassungseinrichtung (111), die als eine Spitzenposition die Abtastposition erfasst, die der größten Zahl von Malen entspricht, die die Abtastposition in jeder Abtastperiode gespeichert wird.

14. Spreizspektrum-Kommunikations-Synchronisationsvorrichtung nach Anspruch 13, wobei die Korrelationseinrichtung ein angepasstes Digitalfilter (105) umfasst.

15. Spreizspektrum-Kommunikations-Synchronisationsvorrichtung nach Anspruch 13 oder 14, die weiter eine Fenster-Festlegungseinrichtung (112) umfasst, die eingerichtet ist, um die Symbolperiode zu ergreifen oder zu halten und eine Empfangsfensterposition festzulegen.

16. Spreizspektrum-Kommunikations-Synchronisationsvorrichtung nach einem der Ansprüche 13 bis 15, wobei die Rangordnungs-Akkumulations-Speichereinrichtung (110) eingerichtet ist, die in der Abtastpositions-Speichereinrichtung (109) gespeicherte spezifizierte Zahl von Abtastpositionen nach Rang einzureihen und eine vorbestimmte Zahl von größten eingereihten Positionen der in der Abtastpositions-Speichereinrichtung gespeicherten spezifizierten Zahl von Positionen zu speichern.

17. Spreizspektrum-Kommunikations-Synchronisationsvorrichtung nach einem der Ansprüche 13 bis 16, die weiter umfasst:
eine Einrichtung zum Verändern der Zahl in der Abtatastpositions-Speichereinrichtung (109) gespeicherter Abtastpositionen und der Zahl in der Rangordnungs-Akkumulations-Speichereinrichtung (110) in jeder Symbolperiode gezählter Abtastpositionen basierend auf der zeitlichen Änderungsrate der Spitzenposition.

18. Spreizspektrum-Kommunikations-Synchronisationsvorrichtung nach Anspruch 16, die weiter umfasst:
eine Einrichtung zum Verändern der Zahl in der Abtastpositions-Speichereinrichtung (109) gespeicherter Abtastpositionen und der Zahl in der Rangordnungs-Akkumulations-Speichereinrichtung (110) in jeder Symbolperiode gezählter Abtastpositionen basierend auf der Fehlerrate von decodierten Daten.

19. Spreizspektrum-Kommunikations-Synchronisationsvorrichtung nach einem der Ansprüche 13 bis 16, die weiter umfasst:
eine Einrichtung(117) zum Subtrahieren eines bestimmten Wertes von den Zählwerten der gespeicherten Abtastpositionen, wenn ein Zählwert in der Rangordnungs-Akkumulations-Speichereinrichtung (110) einen vorbestimmten Maximalwert übersteigt.

20. Spreizspektrum-Kommunikations-Synchronisationsvorrichtung nach einem der Ansprüche 13 bis 16, die weiter umfasst:
eine Einrichtung (118) zum Verändern der Periode zum Zählen der in der Abtastpositions-Speichereinrichtung (109) gespeicherten Abtastpositionen durch die Rangordnungs-Akkumulations-Speichereinrichtung (110) basierend auf einer zeitlichen Änderungsrate der Spitzenposition.

21. Spreizspektrum-Kommunikations-Synchronisationsvorrichtung nach einem der Ansprüche 13 bis 16, die weiter umfasst:
eine Einrichtung zum Zählen der in der Abtastpositions-Speichereinrichtung (109) gespeicherten Abtastpositionen durch die Rangordnungs-Akkumulations-Speichereinrichtung (110), wobei ein Wichtungwert, der von dem Rang oder der Größe der erfassten Abtastungen abhängt, zu den gezählten Abtastzahlen addiert wird.

22. Spreizspektrum-Kommunikations-Synchronisationsvorrichtung nach einem der Ansprüche 13 bis 16, die weiter umfasst:
eine Einrichtung (120) zum Verändern der Arbeitsgeschwindigkeit des Abtasters (104) und der Arbeitsgeschwindigkeit der Abtastpositions-Speichereinrichtung (109) basierend auf einer zeitlichen Änderungsrate der Spitzenposition.

23. Spreizspektrum-Kommunikations-Synchronisationsvorrichtung nach einem der Ansprüche 13 bis 16, die weiter umfasst:
eine Einrichtung (121) zum Verändern der Arbeitsgeschwindigkeit des Abtasters (104) und der Abtastpositions-Speichereinrichtung (109) basierend auf einer Fehlerrate von decodierten Daten.

24. Spreizspektrum-Kommunikations-Synchronisationsvorrichtung nach einem der Ansprüche 13 bis 16, die weiter umfasst:
eine Einrichtung (122) zum Subtrahieren eine bestimmten Wertes von den in der Rangordnungs-Akkumulations-Speichereinheit (110) gespeicherten Zählungen in jeder bestimmten Periode.

25. Spreizspektrum-Kommunikations-Synchronisationsvorrichtung nach einem der Ansprüche 13 bis 16, die weiter umfasst:
einen Speicher (123) zum Speichern einer in einer unmittelbar vorangehenden Symbolperiode erfassten Spitzenposition,
einen Selektor (124) zum Auswählen von Abtastpositionen zum Vergleich, und
einen zweiten Vergleicher (125), der mit dem Selektor verbunden ist, zum Vergleichen der durch den Selektor ausgewählten Abtastpositionen.

26. Spreizspektrum-Kommunikations-Synchronisationsvorrichtung nach einem der Ansprüche 13 bis 25, die weiter umfasst:
einen Taktgenerator (102) mit einer vorbestimmten Taktrate, wobei der Abtasttakt eine Rate aufweist, die ein Ganzzahl-Vielfaches der Taktrate des Taktgenerators ist.

27. Spreizspektrum-Kommunikations-Synchronisationsvorrichtung nach einem der Ansprüche 13 bis 26, die weiter einen Abtastzähler (107) zum Zählen der Abtasttakte umfasst.

## Revendications

1. Procédé de synchronisation de communication à spectre étalé, comprenant les étapes consistant à :
a. échantillonner un signal de transmission à spectre étalé reçu comprenant un code d'étalement modulé avec des données, en utilisant une horloge d'échantillonnage présentant une vitesse qui est un multiple entier du rythme d'une bribe du code d'étalement,
b. corréler des valeurs du signal échantillonné par étalement inverse,
c. effectuer une détection de l'enveloppe des valeurs corrélées pour toutes les valeurs de l'échantillon dans une période de symbole, et comparer une magnitude de chaque sortie de détection,
d. mémoriser la position d'échantillon d'un signal de sortie élevé des m échantillons les plus élevés dans une période de symbole, où m est un nombre spécifié et où lesdites positions des m échantillons sont mémorisées par ordre décroissant de magnitude de la sortie de détection,
e. compter le nombre de fois où des positions d'échantillons sont mémorisées dans chaque période de symbole,
f. détecter en tant que position de pic la position d'échantillon correspondant au plus grand nombre de fois où la position d'échantillon est mémorisée dans chaque période d'échantillon, et
g. synchroniser le symbole de donnée en utilisant la position de pic détectée.

2. Procédé de synchronisation de communication à spectre étalé selon la revendication 1, dans lequel une corrélation du signal à spectre étalé est détectée par un filtre adapté numérique (105).

3. Procédé de synchronisation de communication à spectre étalé selon la revendication 1 ou 2, dans lequel la position de pic détectée est utilisée pour acquérir ou poursuivre la période de symbole et pour configurer une position de fenêtre de réception.

4. Procédé de synchronisation de communication à spectre étalé selon l'une quelconque des revendications précédentes, dans lequel le nombre de positions d'échantillons mémorisées à l'étape d. et le nombre de positions d'échantillons mémorisées pour lesquelles le nombre d'occurrences de mémorisations est compté à l'étape e. sont variables sur la base d'un taux de changements dans le temps de la position de pic.

5. Procédé de synchronisation de communication à spectre étalé selon l'une quelconque des revendications 1 à 3, dans lequel le nombre de positions d'échantillons mémorisées à l'étape d. et le nombre dé positions d'échantillons mémorisées pour lesquelles le nombre d'occurrences de mémorisations est compté à l'étape e. sont variables sur la base d'un taux d'erreurs de données décodées.

6. Procédé de synchronisation de communication à spectre étalé selon l'une quelconque des revendications 1 à 3, dans lequel à l'étape e., lorsqu'un quelconque décompte de positions d'échantillons dépasse une valeur maximum prédéterminée tous les décomptes de positions d'échantillons sont réduits d'une valeur prédéterminée supplémentaire.

7. Procédé de synchronisation de communication à spectre étalé selon l'une quelconque des revendications 1 à 4, dans lequel une période pour compter les nombres d'échantillons à l'étape e. est variable sur la base d'un taux de changements dans le temps de la position de pic.

8. Procédé de synchronisation de communication à spectre étalé selon l'une quelconque des revendications 1 à 3, dans lequel à l'étape e. une valeur de pondération dépendant du classement ou de la magnitude des échantillons détectés est ajoutée aux nombres d'échantillons comptés.

9. Procédé de synchronisation de communication à spectre étalé selon l'une quelconque des revendications 1 à 3, dans lequel la vitesse d'échantillonnage pour détecter la corrélation à l'étape b. et la vitesse opérationnelle à l'étape d. sont variables sur la base d'un taux de changements dans le temps de la position de pic.

10. Procédé de synchronisation de communication à spectre étalé selon l'une quelconque des revendications 1 à 3, dans lequel la vitesse d'échantillonnage pour détecter la corrélation à l'étape b. et la vitesse opérationnelle à l'étape d. sont variables sur la base d'un taux d'erreurs des données décodées.

11. Procédé de synchronisation de communication à spectre étalé selon l'une quelconque des revendications 1 à 3, dans lequel une valeur prédéterminée est soustraite de la valeur de chaque position d'échantillon mémorisée dans une période donnée sur deux.

12. Procédé de synchronisation de communication à spectre étalé selon l'une quelconque des revendications 1 à 3, dans lequel la position de pic est détectée en comparant la position de pic détectée dans une période de symbole précédant immédiatement et la position d'échantillon dans une période de symbole en cours.

13. Dispositif de synchronisation de communication à spectre étalé, comprenant :
un échantillonneur (104) destiné à échantillonner un signal reçu comprenant un code d'étalement modulé avec des données, en utilisant une horloge d'échantillonnage présentant une vitesse qui est un multiple entier d'une vitesse de la bribe du code d'étalement,
un moyen de corrélation effectuant un étalement inverse du signal échantillonné et fournissant un signal corrélé,
un moyen de détection (106) détectant l'enveloppe du signal corrélé pour toutes les valeurs de l'échantillon dans une période de symbole,
un comparateur (108) comparant la magnitude de la sortie détectée du moyen de détection (106) pour chaque valeur de l'échantillon,
un moyen de mémorisation de position d'échantillon (109) couplé audit moyen de détection (106) destiné à mémoriser les positions d'échantillons des m échantillons les plus élevés dans une période de symbole, où m est un nombre spécifié et où lesdites positions d'échantillons sont mémorisées par ordre décroissant de magnitude de la sortie détectée,
un moyen de mémorisation d'accumulation de classement (110) destiné à compter et mémoriser les nombres de fois où des positions d'échantillons sont mémorisées dans chaque période de symbole,
un moyen de détection de position de pic (111) destiné à détecter en tant que position de pic la position d'échantillon correspondant au plus grand nombre de fois où la position d'échantillon est mémorisée dans chaque période d'échantillons.

14. Dispositif de synchronisation de communication à spectre étalé selon la revendication 13, dans lequel le moyen de corrélation comprend un filtre adapté numérique (105).

15. Dispositif de synchronisation de communication à spectre étalé selon la revendication 13 ou 14, comprenant en outre un moyen de configuration de fenêtre (112) conçu pour au moins soit capturer et poursuivre la période de symbole soit configurer une position de fenêtre de réception.

16. Dispositif de synchronisation de communication à spectre étalé selon l'une quelconque des revendications 13 à 15, dans lequel le moyen de mémorisation d'accumulation de classement (110) est conçu pour classer le nombre spécifié de positions d'échantillons mémorisées dans le moyen de mémorisation de position d'échantillon (109) et pour mémoriser un nombre prédéterminé des positions classées les plus élevées dudit nombre spécifié de positions mémorisées dans le moyen de mémorisation de position d'échantillon.

17. Dispositif de synchronisation de communication à spectre étalé selon l'une quelconque des revendications 13 à 16, comprenant en outre :
un moyen pour faire fluctuer le nombre de positions d'échantillons mémorisées dans le moyen de mémorisation de position d'échantillon (109) et le nombre de positions d'échantillons comptées dans chaque période de symbole dans le moyen de mémorisation d'accumulation de classement (110) sur la base du taux de changements dans le temps de la position de pic.

18. Dispositif de synchronisation de communication à spectre étalé selon la revendication 16, comprenant en outre :
un moyen pour faire fluctuer le nombre de positions d'échantillons mémorisées dans le moyen de mémorisation de position d'échantillon (109) et le nombre de positions d'échantillons comptées dans chaque période de symbole dans le moyen de mémorisation d'accumulation de classement (110) sur la base du taux d'erreurs de données décodées.

19. Dispositif de synchronisation de communication à spectre étalé selon l'une quelconque des revendications 13 à 16, comprenant en outre :
un moyen (117) pour soustraire une valeur déterminée des valeurs décomptées des positions d'échantillons mémorisées lorsqu'une valeur comptée dépasse une valeur maximum prédéterminée dans le moyen de mémorisation d'accumulation de classement (110).

20. Dispositif de synchronisation de communication à spectre étalé selon l'une quelconque des revendications 13 à 16, comprenant en outre :
un moyen (118) pour faire fluctuer la période de décompte des positions d'échantillons mémorisées dans le moyen de mémorisation de position d'échantillon (109) par le moyen de mémorisation d'accumulation de classement (110) sur la base d'un taux de changements dans le temps de la position de pic.

21. Dispositif de synchronisation de communication à spectre étalé selon l'une quelconque des revendications 13 à 16, comprenant en outre :
un moyen pour compter les positions d'échantillons mémorisées dans le moyen de mémorisation de position d'échantillon (109) par le moyen de mémorisation d'accumulation de classement (109) dans lequel une valeur de pondération dépendant du classement ou magnitude des échantillons détectés est ajoutée aux nombres d'échantillons comptés.

22. Dispositif de synchronisation de communication à spectre étalé selon l'une quelconque des revendications 13 à 16, comprenant en outre :
un moyen (120) pour faire fluctuer la vitesse opérationnelle de l'échantillonneur (104), et la vitesse opérationnelle du moyen de mémorisation de position d'échantillon (109) sur la base d'un taux de changements dans le temps de la position de pic.

23. Dispositif de synchronisation de communication à spectre étalé selon l'une quelconque des revendications 13 à 16, comprenant en outre :
un moyen (121) pour faire varier la vitesse opérationnelle de l'échantillonneur (104) et le moyen de mémorisation de position d'échantillon (109) sur la base d'un taux d'erreurs de données décodées.

24. Dispositif de synchronisation de communication à spectre étalé selon l'une quelconque des revendications 13 à 16, comprenant en outre :
un moyen (122) soustrayant une valeur déterminée des décomptes mémorisés dans le moyen de mémorisation d'accumulateur de classement (110) dans une période donnée sur deux.

25. Dispositif de synchronisation de communication à spectre étalé selon l'une quelconque des revendications 13 à 16, comprenant en outre :
une mémoire (123) destinée à mémoriser une position de pic détectée dans une période dé symbole précédant immédiatement,
un sélecteur (124) destiné à sélectionner des positions d'échantillons pour comparaison, et
un second comparateur (125) couplé au sélecteur destiné à comparer les positions d'échantillons sélectionnées par le sélecteur.

26. Dispositif de synchronisation de communication à spectre étalé selon l'une quelconque des revendications 13 à 25, comprenant en outre :
un générateur d'horloge (102) possédant une vitesse d'horloge prédéterminée,
dans lequel l'horloge d'échantillonnage présente un rythme qui est un multiple entier du rythme d'horloge du générateur d'horloge.

27. Dispositif de synchronisation de communication à spectre étalé selon l'une quelconque des revendications 13 à 26, comprenant en outre un compteur d'échantillon (107) destiné à compter les horloges d'échantillonnage.
